# EUROPEAN PATENT APPLICATION

(11) **EP 4 249 865 A1**
(43) Date of publication of application: **27.09.2023**
(21) Application number: 21894381.9
(22) Date of filing: 13.10.2021
(51) Int. Cl.: G01H 17/00, G01M 99/00

(54) **MONITORING DEVICE, SOUND COLLECTING DEVICE, AND MONITORING METHOD**

(30) Priority: 19.11.2020 JP 2020192520
(71) Applicant: JTEKT Corporation, Kariya-shi, Aichi-ken, 448-8652 (JP)
(72) Inventor: STOIMENOV, Boyko, Kariya-shi, Aichi 448-8652 (JP); NOZAKI, Mikio, Kariya-shi, Aichi 448-8652 (JP)
(74) Representative: Winter, Brandl - Partnerschaft mbB
(86) International application number: PCT/JP2021/037928
(87) International publication number: WO 2022/107507

(57) **Abstract**

A monitoring device (1), a sound collecting device (11), and a monitoring method, comprising: a sound collecting device (11) in which a plurality of microphones (110) converting sound waves to a primary sound pressure signal (SP1) are positioned, said sound waves including ultrasonic waves and audible sound that are produced from an apparatus (2); and an information processing device (12) that can perform processing by which the presence of an abnormality in the apparatus (2) is detected on the basis of the primary sound pressure signal (SP1) of the audible sound, and processing by which a secondary sound pressure signal (SP2) resulting from beamforming the primary sound pressure signal (SP1) of the ultrasonic waves is generated and an abnormality location (P) in the apparatus (2) is detected on the basis of the secondary sound pressure signal (SP2).

## Description

### TECHNICAL FIELD

The present disclosure relates to a monitoring device, a sound collecting device, and a monitoring method for monitoring a state of a device.

### BACKGROUND ART

There is known a technique for diagnosing an abnormality of a device based on a sound generated from a device. For example, JP2013-200144A discloses a technique of performing various processing such as fast Fourier transform on a signal from a sound collector to learn and diagnose a sample value.

JP2001-151330A discloses a technique using a non-directional microphone and a directional microphone, in relation to a belt conveyor abnormality diagnostic device.

JP2017-32488A discloses a technique in which a microphone array, in which sound collecting elements are two-dimensionally arranged, is arranged inside a device, and a two-dimensional position of a sound source, in which an abnormal sound is generated, is specified. In JP2017-32488A, the position of the sound source of the abnormal sound is specified based on a position of a sound collecting element in which arrival time of the abnormal sound is the earliest or a position of a sound collecting element in which the abnormal sound is detected most strongly. Further, a device unit of the sound source, in which the abnormal sound is generated, is specified based on a device map related to a planar arrangement of the device and based on the position of the sound source.

JP2013-15468A discloses a technique of extracting an abnormal region using a sound collecting device in which a plurality of microphones are attached at equal intervals. In JP2013-15468A, a plurality of virtual screens are virtually set, each virtual screen is divided into a grid, and a sound pressure level for each grid point is calculated by performing a beamforming processing on a sound pressure signal obtained from the sound collecting device. Further, by comparing the sound pressure level with a reference sound pressure level, the sound pressure abnormal region is extracted from the plurality of grid points.

In a monitoring device according to JP2017-32488A, a sound collecting device (microphone array) having a plurality of microphones is arranged in a housing of a target device, and the monitoring device detects an abnormality of a device such as presence or absence of an abnormality and an abnormal portion. As described above, in a case where the abnormality of the device is monitored based on the sound detected by the sound collecting device, the sound collecting device is required to have a size that the sound collecting device can be arranged in the housing of the device or in the immediate vicinity of a portion of the device to be monitored, and is required to have such an accuracy that the sound collecting device can detect a sound necessary for detecting an abnormality of the device.

In the monitoring device including the sound collecting device having the plurality of microphones, by detecting sound waves emitted from a sound source corresponding to an abnormal portion with the plurality of microphones, it is possible to detect a position of the sound source corresponding to the abnormal portion, based on a difference between arrival time of sound waves in each microphone (that is, a phase difference) and a sound pressure level. Here, in a case where an interval between the microphones is increased, the phase difference of the sound waves detected by the sound collecting device can be increased, and a detection range of the sound waves in the sound collecting device can be increased. Therefore, in the sound collecting device including the plurality of microphones, in a case where the interval between the microphones can be increased, it is possible to improve the detection accuracy of the abnormality of the device such as the presence or absence of an abnormality and the abnormal portion.

However, since the size of the sound collecting device including the plurality of microphones increases as the interval between the microphones increases, the sound collecting device is less likely to be arranged in the housing of the device or in the immediate vicinity of the portion of the device to be monitored. For this reason, in the monitoring device in which the sound collecting device having the plurality of microphones is arranged in the housing of a device or in the immediate vicinity of the portion of the device to be monitored, it is difficult to increase the interval between the microphones to increase the detection accuracy of the abnormality of the device such as the presence or absence of an abnormality and the abnormal portion.

### SUMMARY OF INVENTION

The present disclosure relates to a monitoring device and a monitoring method capable of detecting an abnormality and an abnormal portion of a target device based on sound waves detected by a plurality of microphones, relates to a sound collecting device used in the monitoring device and the monitoring method, and makes it possible to accurately detect an abnormality of a device without increasing the size of the sound collecting device.

According to a first aspect of the present disclosure, there is provided a monitoring device for monitoring an operation state of a device, the monitoring device including: a sound collecting device in which a plurality of microphones are arranged, the plurality of microphones being configured to convert a sound wave emitted from the device into a primary sound pressure signal, the sound wave including an audible sound and an ultrasonic wave; and an information processing device configured to perform: a first processing of detecting presence or absence of an abnormality of the device, based on a signal, in an audible range, of the primary sound pressure signal; and a second processing of performing a beamforming processing on a signal, in an ultrasonic range, of the primary sound pressure signal to generate a secondary sound pressure signal, and detecting an abnormal portion of the device, based on the secondary sound pressure signal.

According to the first aspect, by setting the sound wave for detecting the abnormal portion of the device to the ultrasonic wave, it is possible to accurately detect the abnormal portion without increasing the interval between the microphones. Further, by setting the sound wave for detecting the abnormality of the device to the audible sound, it is possible to accurately detect the abnormality of the device based on a typical audible sound emitted from the device having the abnormality. As a result, it is possible to accurately detect the abnormality of the device without increasing the size of the sound collecting device.

According to a second aspect of the present disclosure, it is preferable that the information processing device is configured to perform the second processing, in a case where the information processing device detects, in the first processing, that there is an abnormality in the device.

By adopting a configuration according to the second aspect, an amount of calculation of the information processing device can be reduced.

According to a third aspect of the present disclosure, it is preferable that the information processing device is configured to further perform a third processing of detecting an abnormal content of the device, based on a signal, in the audible range, of the primary sound pressure signal, in a case where the information processing device detects, in the first processing, that there is an abnormality in the device.

By adopting a configuration according to the third aspect, it is possible to accurately detect the abnormal content of the device based on a typical audible sound emitted from the device having the abnormality, by setting the sound wave for detecting the abnormal content of the device to be the audible sound.

According to a fourth aspect of the present disclosure, it is preferable that, in the second processing, the information processing device is configured to detect the abnormal portion of the device, based on the secondary sound pressure signal in a frequency band that does not include a natural vibration frequency of the device.

By adopting the configuration according to the fourth aspect, it is possible to more accurately detect the abnormal portion of the device.

According to a fifth aspect of the present disclosure, it is preferable that the information processing device is configured to perform a fourth processing of acquiring an initial primary sound pressure signal, the initial primary sound pressure signal being the primary sound pressure signal of the sound wave emitted from the device at an initial stage of an operation of the device, and, in the second processing, the information processing device is configured to detect the abnormal portion of the device, based on a difference between an initial secondary sound pressure signal and the secondary sound pressure signal, the initial secondary sound pressure signal being the secondary sound pressure signal generated by performing the beamforming processing on the initial primary sound pressure signal, the secondary sound pressure signal being generated in the second processing after the initial stage of the operation of the device.

By adopting the configuration according to the fifth aspect, it is possible to more accurately detect the abnormal portion of the device.

According to a sixth aspect of the present disclosure, it is preferable that the plurality of microphones include: a first microphone group in which an interval between the microphones is set to a distance suitable for detection of the ultrasonic wave; and a second microphone group in which an interval between the microphones is set to a distance suitable for detection of the audible sound and larger than the distance of the first microphone group.

By adopting the configuration according to the sixth aspect, it is possible to accurately detect the sound waves of the audible sound and the ultrasonic wave with one sound collecting device without increasing the size of the sound collecting device. As a result, the sound collecting device can be easily arranged in a housing of the device or in the immediate vicinity of a portion of the device to be monitored.

According to a seventh aspect of the present disclosure, there is provided a sound collecting device used in a monitoring device for monitoring an operation state of a device, the sound collecting device including: a plurality of microphones configured to convert a sound wave emitted from the device into a sound pressure signal, the sound wave including an audible sound and an ultrasonic wave, in which the plurality of microphones include: a first microphone group in which an interval between the microphones is set to a distance suitable for detection of the ultrasonic wave; and a second microphone group in which an interval between the microphones is set to a distance suitable for detection of the audible sound and larger than the distance in the first microphone group.

According to the seventh aspect, it is possible to accurately detect the sound waves of the audible sound and the ultrasonic wave with one sound collecting device without increasing the size of the sound collecting device. As a result, the sound collecting device can be easily arranged in a housing of the device or in the immediate vicinity of a portion of the device to be monitored.

According to an eighth aspect of the present disclosure, there is provided a monitoring method for monitoring an operation state of a device by a sound collecting device in which a plurality of microphones are arranged, the monitoring method including: acquiring, as a primary sound pressure signal, a sound wave emitted from the device through the plurality of microphones, the sound wave including an audible sound and an ultrasonic wave; detecting presence or absence of an abnormality of the device, based on a signal, in an audible range, of the acquired primary sound pressure signal; and in a case where it is detected that there is an abnormality in the device, detecting an abnormal portion of the device, based on a secondary sound pressure signal generated by performing a beamforming processing on a signal, in an ultrasonic range, of the acquired primary sound pressure signal.

According to the eighth aspect, by setting the sound wave for detecting the abnormal portion of the device to the ultrasonic wave, it is possible to accurately detect the abnormal portion without increasing the interval between the microphones. Further, by setting the sound wave for detecting the abnormality of the device to the audible sound, it is possible to accurately detect the abnormality of the device based on a typical audible sound emitted from the device having the abnormality. As a result, it is possible to accurately detect the abnormality of the device without increasing the size of the sound collecting device.

According to a ninth aspect of the present disclosure, it is preferable that the monitoring method further includes, in a case where it is detected that there is an abnormality in the device, detecting an abnormal content of the device, based on a signal, in the audible range, of the acquired primary sound pressure signal.

By adopting a configuration according to the ninth aspect, it is possible to accurately detect the abnormal content of the device based on a typical audible sound emitted from the device having an abnormality, by setting the sound wave for detecting the abnormal content of the device to the audible sound.

According to the present disclosure, regarding the monitoring device and the monitoring method capable of detecting an abnormality and an abnormal portion of a target device based on sound waves detected by the plurality of microphones, and the sound collecting device used in the monitoring device and the monitoring method, it is possible to accurately detect an abnormality of the device without increasing the size of the sound collecting device.

### BRIEF DESCRIPTION OF DRAWINGS

[FIG. 1] FIG. 1 is a schematic diagram illustrating a monitoring device according to an embodiment.
[FIG. 2] FIG. 2 is an explanatory diagram illustrating an arrangement of a sound collecting device with respect to a device to be monitored.
[FIG. 3A] FIG. 3Ais an explanatory diagram illustrating an example of map information according to the embodiment.
[FIG. 3B] FIG. 3B is an explanatory diagram illustrating an example of the map information according to the embodiment.
[FIG. 4A] FIG. 4A is a schematic diagram illustrating an arrangement of microphones in the sound collecting device.
[FIG. 4B] FIG. 4B is a schematic diagram illustrating an arrangement of the microphones in the sound collecting device.
[FIG. 5] FIG. 5 is a flowchart illustrating a procedure of a monitoring processing according to the embodiment.
[FIG. 6] FIG. 6 is an explanatory diagram illustrating a detection state of sound waves in an abnormality detection step.
[FIG. 7A] FIG. 7A is an explanatory diagram illustrating a state of a beamforming processing in an abnormal portion detection step.
[FIG. 7B] FIG. 7B is an explanatory diagram illustrating a beam scanning range in the beamforming processing.
[FIG. 8] FIG. 8 is a diagram illustrating a power spectrum of a natural vibration frequency of the device.
[FIG. 9] FIG. 9 is a diagram illustrating a relationship between a power spectral density and a beam scanning angle of a secondary sound pressure signal at a predetermined frequency in an ultrasonic range.
[FIG. 10] FIG. 10 is an explanatory diagram illustrating a method of determining an abnormal portion.
[FIG. 11A] FIG. 11A is a diagram illustrating a detection result of an abnormal portion by the monitoring device according to the embodiment.
[FIG. 11B] FIG. 11B is a diagram illustrating a detection result of an abnormal portion by the monitoring device according to the embodiment.
[FIG. 11C] FIG. 11C is a diagram illustrating a detection result of an abnormal portion by the monitoring device according to the embodiment.

### DESCRIPTION OF EMBODIMENTS

Hereinafter, embodiments according to the present disclosure will be described with reference to the drawings.

In the present disclosure, a term "sound wave" refers to an elastic wave that propagates in a medium (for example, gas, liquid, or solid). The sound wave includes an ultrasonic wave (that is, 20 kHz or more) and an ultra-low-frequency sound (that is, less than 20 Hz), in addition to "sound" (hereinafter, referred to as audible sound) which is an audible frequency of a human (that is, 20 Hz or more and less than 20 kHz).

### [Configuration of Monitoring Device]

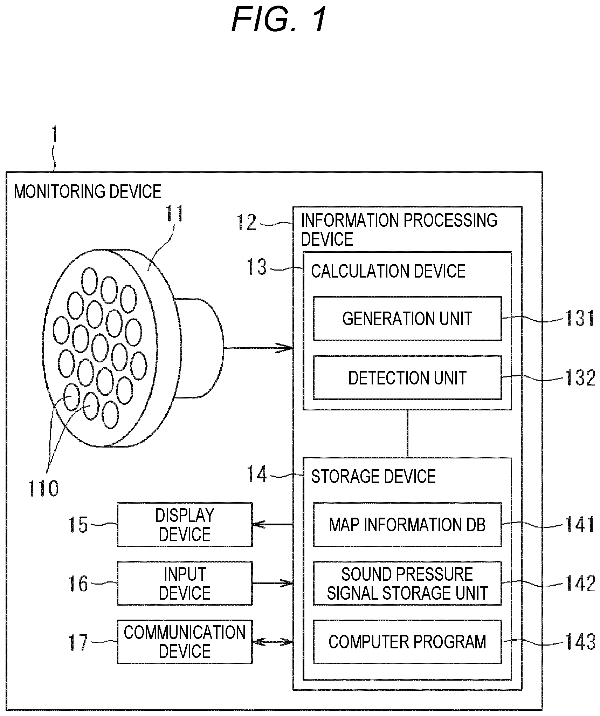

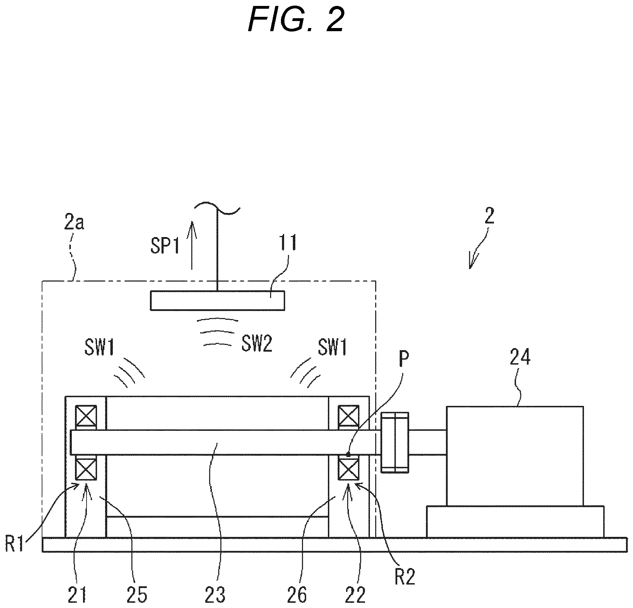

The monitoring device 1 illustrated in FIG. 1 is a device configured to monitor an operation state of a device 2, illustrated in FIG. 2, to be monitored based on sound waves. The monitoring device 1 is installed in, for example, a room in which the device 2 is installed.

As illustrated in FIG. 1, the monitoring device 1 includes a sound collecting device 11, an information processing device 12, a display device 15, an input device 16, and a communication device 17. The sound collecting device 11 includes a plurality of microphones 110 arranged on a plane. That is, the sound collecting device 11 is a microphone array (plane array).

The microphone 110 is a sound pressure sensor configured to convert, into a primary sound pressure signal SP1, a synthesized sound wave SW2 in which the sound waves SW1 emitted from a plurality of target regions R are synthesized (see FIG. 2). The microphone 110 configured to convert, into the primary sound pressure signal SP1, the synthesized sound wave SW2 of the audible sound (that is, 20 Hz or more and less than 20 kHz) and the ultrasonic wave (that is, 20 kHz or more). The microphone 110 is, for example, a non-directional microphone. The arrangement of the microphone 110 will be described later.

The information processing device 12 includes a calculation device 13 and a storage device 14. The information processing device 12 is, for example, a computer device. The storage device 14 is a device configured to store various types of information, and includes, for example, a hard disk drive (HDD), a random access memory (RAM), and a read only memory (ROM).

The storage device 14 functionally includes a map information database 141 and a sound pressure signal storage unit 142. The map information database 141 and the sound pressure signal storage unit 142 are each configured by a predetermined storage area in the storage device 14. The map information database 141 and the sound pressure signal storage unit 142 may be configured by the same storage area or configured by different storage areas. The storage device 14 is configured to further store a computer program 143.

The device 2 illustrated in FIG. 2 is an example of a device in which a general-purpose device (for example, a blower, a pump, a compressor, or a machine tool), including a bearing, a rotary shaft, and a motor, is simplified. As illustrated in FIG. 2, the device 2 includes a pair of bearings 21 and 22, a rotary shaft 23 rotatably supported by the bearings 21 and 22, and a motor 24 configured to drive the rotary shaft 23. The bearings 21 and 22 are held by blocks 25 and 26, respectively.

In the present embodiment, a portion of the device 2 where an abnormality occurs is referred to as an abnormal portion P. FIG. 2 illustrates a case where the abnormal portion P is present in the bearing 22 in the device 2 (in other words, a case where an abnormality occurs in the bearing 22). Further, in the present embodiment, regions where the bearings 21 and 22 are present are referred to as target regions R1 and R2, respectively. The "target region" is a region where a component in which an abnormality is assumed to occur in the device 2 is positioned. Hereinafter, these target regions R1 and R2 will be simply referred to as "target regions R" unless otherwise distinguished. In the following description, description of "detecting an abnormal portion" means "detecting the target region R including the abnormal portion P".

As illustrated in FIG. 2, the sound collecting device 11 is installed at some point distant from the plurality of target regions R. For example, the sound collecting device 11 is installed at a position spaced several tens of centimeters to several meters away from the plurality of target regions R, in a state where the sound collecting device 11 faces the plurality of target regions R. In a case where the target regions R1 and R2 are covered with a housing 2a as illustrated in FIG. 2, the sound collecting device 11 is arranged at a position where the sound collecting device 11 faces the target regions R1 and R2 in the housing 2a.

In this way, since the sound collecting device 11 is installed at a position separated from the plurality of target regions R by a predetermined distance, it is possible to acquire the synthesized sound wave SW2 in which the sound waves SW1 emitted from the plurality of target regions R are synthesized, instead of acquiring only the sound wave SW1 emitted from the specific target region R.

The map information database 141 of the information processing device 12 illustrated in FIG. 1 is configured to store map information M1. The map information M1 is information on position of each of the plurality of target regions R with respect to the sound collecting device 11.

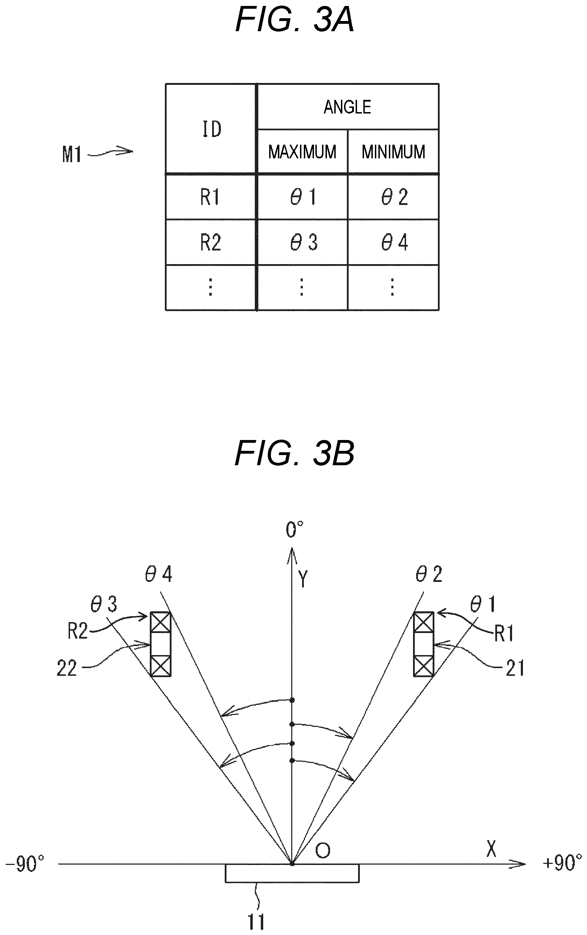

FIGs. 3A and 3B are explanatory diagrams illustrating an example of the map information M1. For example, as illustrated in FIG. 3A, the map information M1 is stored as table format information including an identification number ID of the target region R and an angle indicating a direction in which the target region R is present. In a case where a relative position between the sound collecting device 11 and the device 2 is determined, the relative position between the sound collecting device 11 and the target region R is uniquely determined in the map information M1. Therefore, a user inputs, to the input device 16, position information of the target region R with respect to the sound collecting device 11 to store the position information in the map information database 141. In addition, the map information M1 may be acquired by receiving the map information M1 from a management device via the communication device 17.

FIG. 3B is a schematic diagram illustrating an example of the map information M1 on a predetermined XY plane. The XY plane is a plane perpendicular to a plane (hereinafter referred to as an array surface) on which the plurality of microphones 110 of the sound collecting device 11 are arranged. In other words, FIG. 3B illustrates the positions of the plurality of target regions R projected on the predetermined XY plane in a case where the plurality of target regions R are viewed, from the sound collecting device 11, in a direction parallel to the array surface. In FIG. 3B, an angle in a positive direction of the Y-axis is set to 0° on the XY plane in which a center of the array surface of the sound collecting device 11 is set as an origin O, and the minimum angle and the maximum angle of the range, in which a contour of the target region R is present as viewed from the origin O, are stored in the map information M1.

In the map information M1, an angle θ1 illustrated in FIG. 3B is the maximum angle θ1 of the target region R1, and an angle θ2 is the minimum angle θ2 of the target region R1. That is, a range in which the angle is θ2 or more and θ1 or less as viewed from the origin O is a range in which the target region R1 is present. In the map information M1, an angle θ3 illustrated in FIG. 3B is the maximum angle θ3 of the target region R2, and an angle θ4 is the minimum angle θ4 of the target region R2. That is, the range in which the angle is θ4 or more and θ3 or less as viewed from the origin O is a range in which the target region R2 is present. In the map information M1, only an angle of a straight line passing through the origin O and the center of the target region R may be stored in the map information M1.

The map information M1 may further include information on an angle in a direction orthogonal to the XY plane. That is, the Z direction orthogonal to the XY plane is defined, and in an XYZ coordinate system, in a case where the plurality of target regions R are viewed, from the sound collecting device 11, in the direction parallel to the array surface, the minimum angle and the maximum angle viewed from the origin O of the range in which the contour of the target region R is present may be added to the information stored in the map information M1, for the plurality of target regions R projected on a predetermined YZ plane.

The sound pressure signal storage unit 142 illustrated in FIG. 1 is configured to store the primary sound pressure signal SP1 acquired by the sound collecting device 11 and a secondary sound pressure signal SP2 calculated by the calculation device 13.

The calculation device 13 is a device configured to read the computer program 143 from the storage device 14 and configured to perform various calculations, and is, for example, a central processing unit (CPU). The calculation device 13 realizes a function as the generation unit 131 and a function as the detection unit 132 by executing the computer program 143 stored in the storage device 14.

The generation unit 131 is configured to perform the beamforming processing on the primary sound pressure signal SP1 to generate the secondary sound pressure signal SP2 from the primary sound pressure signal SP1. The detection unit 132 is configured to detect an abnormality in the target region R, based on the primary sound pressure signal SP1 or the secondary sound pressure signal SP2. Specific functions of the generation unit 131 and the detection unit 132 will be described later.

The display device 15 is electrically connected to the information processing device 12, and is configured to display the monitoring information of the target region R to the user. The display device 15 is, for example, a display and a speaker. The monitoring information includes, for example, information on an abnormality detection result and an abnormality cause detected by the detection unit 132. The input device 16 is electrically connected to the information processing device 12, and is configured to transmit, to the information processing device 12, information input from the user. The input device 16 is, for example, a mouse and a keyboard.

The communication device 17 is electrically connected to the information processing device 12, and is configured to transmit and receive various information to and from an external device (for example, the management device configured to manage the plurality of monitoring devices 1), which is not illustrated. For example, the communication device 17 is configured to transmit, to the management device, the monitoring information of the target region R, and configured to receive, from the management device, various types of setting information such as the map information M1.

### [Arrangement of Microphones in Sound Collecting Device]

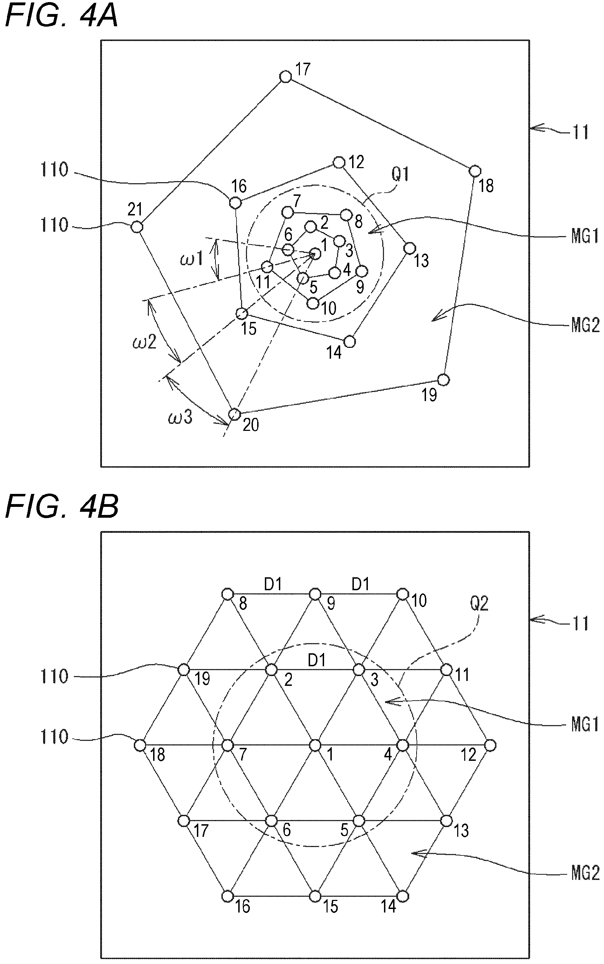

FIG. 4A is an explanatory diagram illustrating the arrangement of the plurality of microphones 110 in the sound collecting device 11. As illustrated in FIG. 4A, 21 microphones 110 are arranged on the array surface of the sound collecting device 11. On the array surface of the sound collecting device 11, with the microphone 110 of a number 1 as a center, the microphones 110 of a first round (that is, numbers 2 to 6) arranged in a regular pentagon on an outer side of the microphone 110 of the number 1 are arranged at equal intervals in a peripheral direction. On an outer side of the microphones 110 of the first round, the microphones 110 of a second round (that is, numbers 7 to 11) arranged in a regular pentagon are arranged at equal intervals in the peripheral direction. Further, on an outer side of the microphones 110 of the second round, the microphones 110 of a third round (that is, numbers 12 to 16) arranged in a regular pentagon are arranged at equal intervals in the peripheral direction. Furthermore, on an outer side of the microphones 110 of the third round, the microphones 110 of a fourth round (that is, numbers 17 to 21) arranged in a regular pentagon are arranged at equal intervals in the peripheral direction.

As illustrated in FIG. 4A, a phase, in a rotation direction around the microphone 110 of the number 1, of the regular pentagon of the second round is different from a phase of the regular pentagon of the first round by an angle ω1 in a counterclockwise direction in FIG. 4A. Further, a phase, in the rotation direction around the microphone 110 of the number 1, of the regular pentagon of the third round is different from the phase of the regular pentagon of the second round by an angle ω2 in the counterclockwise direction in FIG. 4A. Here, the angle ω2 is larger than the angle ω1 (ω2 > ω1). Further, a phase, in the rotation direction around the microphone 110 of the number 1, of the regular pentagon of the fourth round is different from the phase of the regular pentagon of the third round by an angle ω3 in the counterclockwise direction in FIG. 4A. Here, the angle ω3 is larger than the angle ω2 (ω3 > ω2).

With such a configuration, the microphones 110 arranged on the array surface of the sound collecting device 11 can be arranged to be more dispersed as compared with a case where the microphones 110 of the first to fourth rounds are arranged without providing a phase difference in the peripheral direction. In addition, in a case where the angle is expressed as ω3 > ω2 > ω1, in the sound collecting device 11, intervals between the microphones 110 in the peripheral direction and a radial direction are larger as the microphones 110 are positioned more outward. In other words, in the sound collecting device 11, the intervals between the microphones 110 in the peripheral direction and the radial direction are smaller as the microphones 110 are positioned more inward.

In the sound collecting device 11, the microphones 110 (that is, the numbers 1 to 11) that are arranged in the center, the first round, and the second round and arranged on an inner side of a circle Q1 as illustrated in FIG. 4A configure a first microphone group MG1 in which the interval between the microphones 110 is a distance suitable for the detection of the ultrasonic wave. In addition, in the sound collecting device 11, the microphones 110 (that is, the numbers 12 to 21) that are arranged on the third and fourth rounds and arranged on an outer side of the circle Q1 configure a second microphone group MG2 in which the interval between the microphones 110 is a distance suitable for the detection of the audible sound.

Specifically, in the sound collecting device 11 of the present embodiment, the interval between the microphones 110 in the first microphone group MG1 is about 2.3 mm to 8.5 mm. A wavelength of the ultrasonic waves is, for example, about 17 mm at 20 kHz and about 7 mm at 50 kHz. Therefore, according to the sound wave detected in the first microphone group MG1, a sufficient phase difference can be obtained for the detection of the target region R including the abnormal portion P. The interval between the microphones 110 in the second microphone group MG2 is 8.5 mm or more. Therefore, each microphone 110 of the second microphone group MG2 is suitable for detecting audible sound having a longer wavelength than the ultrasonic waves, and is configured to detect a wide range of sound waves as compared with the first microphone group MG1. The sound collecting device 11 is configured to output, as the primary sound pressure signal SP1, a detection result of the ultrasonic wave by the first microphone group MG1 and a detection result of the audible sound by the second microphone group MG2.

With such a configuration, the sound collecting device 11 can accurately detect the audible sound suitable for the presence or absence of an abnormality in the device 2 and the detection of an abnormal content, and can accurately detect the ultrasonic wave suitable for the detection of the abnormal portion.

The arrangement of the plurality of microphones 110 in the sound collecting device 11 is not limited to the arrangement illustrated in FIG. 4A, and may be, for example, a hexagonal arrangement as illustrated in FIG. 4B. In the sound collecting device 11 illustrated in FIG. 4B, the centers of the microphones 110 of the number 2 to 7 are positioned on vertexes of a regular hexagon in which a length of one side is D1, and the center of the microphone 110 of the number 1 is positioned at a center of gravity of the regular hexagon. Further, the centers of the microphones 110 of the numbers 8 to 19 are positioned on the respective vertexes and middle points of the respective sides of the regular hexagon that surrounds the regular hexagon and whose one side is twice as long as D1. That is, the plurality of microphones 110 positioned at the outermost periphery are positioned on the sides or the vertexes of the regular hexagon. In this case, the microphones 110 of the numbers 1 to 7 arranged on an inner side of a circle Q2 illustrated in FIG. 4B configure the first microphone group MG1 in which the interval between the microphones 110 is set to a distance suitable for the detection of the ultrasonic wave, and the microphones 110 of the numbers 8 to 19 arranged on an outer side of the circle Q2 configure the second microphone group MG2 in which the interval between the microphones 110 is set to a distance suitable for the detection of the audible sound.

As described above, the sound collecting device 11 of the present embodiment is the sound collecting device 11 used in the monitoring device 1 configured to monitor the operation state of the device 2, and includes the plurality of microphones 110 configured to convert, into the sound pressure signal, the sound wave including the audible sound and the ultrasonic wave emitted from the device 2. The plurality of microphones 110 include the first microphone group MG1 in which the interval between the microphones 110 is set to a distance suitable for the detection of the ultrasonic wave, and the second microphone group MG2 in which the interval between the microphones 110 is set to a distance suitable for the detection of the audible sound and larger than the distance in the first microphone group MG1. With this configuration, it is possible to accurately detect the sound waves of the audible sound and the ultrasonic wave in one sound collecting device 11 without increasing the size of the sound collecting device 11. As a result, the sound collecting device 11 can be easily arranged in the housing of the device 2 or in the immediate vicinity of the portion of the device 2 to be monitored.

### [Procedure of Monitoring Processing]

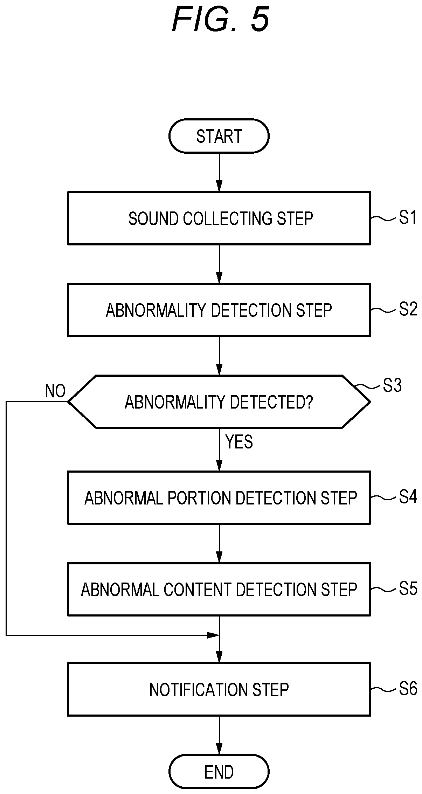

FIG. 5 is a flowchart illustrating a procedure of a monitoring processing according to the embodiment. In a case where the user of the monitoring device 1 gives an instruction, to the monitoring device 1, to perform the monitoring processing, using the input device 16, the monitoring device 1 starts the monitoring processing. The monitoring device 1 periodically performs the following monitoring processing until the device 2 is stopped or until the user gives an instruction, to the monitoring device 1, to stop the monitoring processing, using the input device 16.

### <Sound Collecting Step>

In a case where the monitoring processing is started, a sound collecting step S1 is performed. The sound collecting step S1 is performed while the device 2 illustrated in FIG. 2 is operating. That is, during the sound collecting step S1, the plurality of respective target regions R1 and R2 generate the sound waves SW1, and the sound collecting device 11 propagates the synthesized sound wave SW2 in which sound waves SW1 are synthesized (see FIG. 2).

In a case where the sound collecting step S1 is started, the plurality of microphones 110 included in the sound collecting device 11 is configured to convert the input synthesized sound wave SW2 into the primary sound pressure signal SP1 and output the primary sound pressure signal SP1 to the information processing device 12. Here, the microphone 110 is configured to convert, into the primary sound pressure signal SP1, the synthesized sound wave SW2 of the audible sound (that is, 20 Hz or more and less than 20 kHz) and the ultrasonic wave (that is, 20 kHz or more). The plurality of primary sound pressure signals SP1 acquired for each microphone 110 are stored in the sound pressure signal storage unit 142. Accordingly, the sound collecting step S1 ends.

The information processing device 12 is configured to acquire the primary sound pressure signal SP1 detected in the sound collecting step S1 at an initial stage of an operation in which there is no abnormality in the device 2, as an initial primary sound pressure signal SP0 in distinction from the other primary sound pressure signal SP1. Then, the information processing device 12 is configured to store the initial primary sound pressure signal SP0 in the sound pressure signal storage unit 142.

### <Abnormality Detection Step>

Next, an abnormality detection step S2 is performed. In the abnormality detection step S2, the detection unit 132 is configured to detect the presence or absence of an abnormality in the target region R, using, in particular, a signal in a frequency range of an audible sound (that is, 20 Hz or more and less than 20 kHz) in the primary sound pressure signal SP1 stored in the sound pressure signal storage unit 142.

In a case where a typical abnormality, such as failure or insufficient lubrication of the bearings 21 and 22 and damage to the rotary shaft 23, occurs in the target regions R1 and R2 of the device 2, a characteristic sound wave (hereinafter, referred to as a characteristic sound wave SW3) in the order of several hundred kHz (that is, an audible range) is generated from the target region R in which the abnormality occurs. The detection unit 132 is configured to detect the presence or absence of the characteristic sound wave SW3 from the signal particularly in the frequency range of the audible sound (that is, 20 Hz or more and less than 20 kHz) of the primary sound pressure signal SP1.

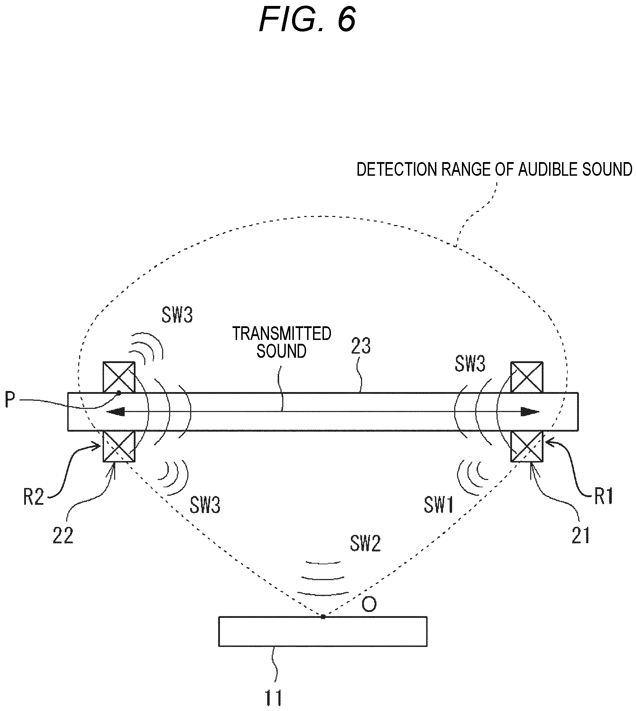

As illustrated in FIG. 6, in the device 2, since the characteristic sound wave SW3, emitted from the target region R in which the abnormality occurs, is also transmitted to the other target region R via the rotary shaft 23, for example, the characteristic sound wave SW3 may be emitted from the target region R in which there is no abnormality. That is, it is difficult to detect the target region R including the abnormal portion P based on the characteristic sound wave SW3. As illustrated in FIG. 6, the sound collecting device 11 can detect the synthesized sound wave SW2 in which the sound waves SW1 from the range including the plurality of target regions R are collected. Therefore, in a case where an abnormality occurs in one of the target regions R and the characteristic sound wave SW3 is generated, the sound collecting device 11 can reliably detect the synthesized sound wave SW2 including the sound wave SW1 and the characteristic sound wave SW3.

The detection unit 132 is configured to attempt to detect the characteristic sound wave SW3 in the audible range using the primary sound pressure signal SP1 stored in the sound pressure signal storage unit 142. In a case where the detection unit 132 detects the characteristic sound wave SW3, the detection unit 132 is configured to output a result of "abnormality" to the storage device 14. In a case where the detection unit 132 does not detect the characteristic sound wave SW3, the detection unit 132 is configured to output a result of "no abnormality" to the storage device 14. In the abnormality detection step S2, the detection of the target region R in which the abnormality occurs is not performed. The detection of the target region R in which the abnormality occurs is performed in a subsequent abnormal portion detection step S4.

The detection unit 132 can accurately detect the presence or absence of an abnormality in the device 2 by detecting a typical sound wave emitted from the abnormal device 2 from a signal, in an audible range, of the primary sound pressure signal SP1. In this case, since it is not necessary for the detection unit 132 to determine the presence or absence of an abnormality for each of the plurality of target regions R, the detection unit 132 can detect the presence or absence of an abnormality in the device 2 with a small amount of calculation.

### <Determination Step>

Next, as indicated by a reference numeral S3 in FIG. 5, the information processing device 12 performs determination based on the detection result of the detection unit 132. In a case where the detection unit 132 outputs the result of the "abnormality" in the abnormality detection step S2 (that is, in the case of "YES"), the processing then proceeds to the abnormal portion detection step S4. On the other hand, in a case where the detection unit 132 outputs the result of "no abnormality" in the abnormality detection step S2 (that is, in the case of "NO"), the processing proceeds to a notification step S6.

As described above, in a case where the information processing device 12 detects that there is an abnormality in the device 2 in the abnormality detection step S2, the information processing device 12 is configured to perform the abnormal portion detection step S4. With this configuration, the amount of calculation of the information processing device 12 can be reduced. As a result, calculation time of the information processing device 12 is shortened, and the presence or absence of abnormality of the device 2 can be determined in real time.

### <Abnormal Portion Detection Step>

In a case where it is determined that the result is "abnormality" in the abnormality detection step S2, next, the abnormal portion detection step S4 is performed. In a case where the abnormal portion detection step S4 is started, the detection unit 132 is configured to perform a processing of detecting the target region R including the abnormal portion P, by using the secondary sound pressure signal SP2 stored in the sound pressure signal storage unit 142.

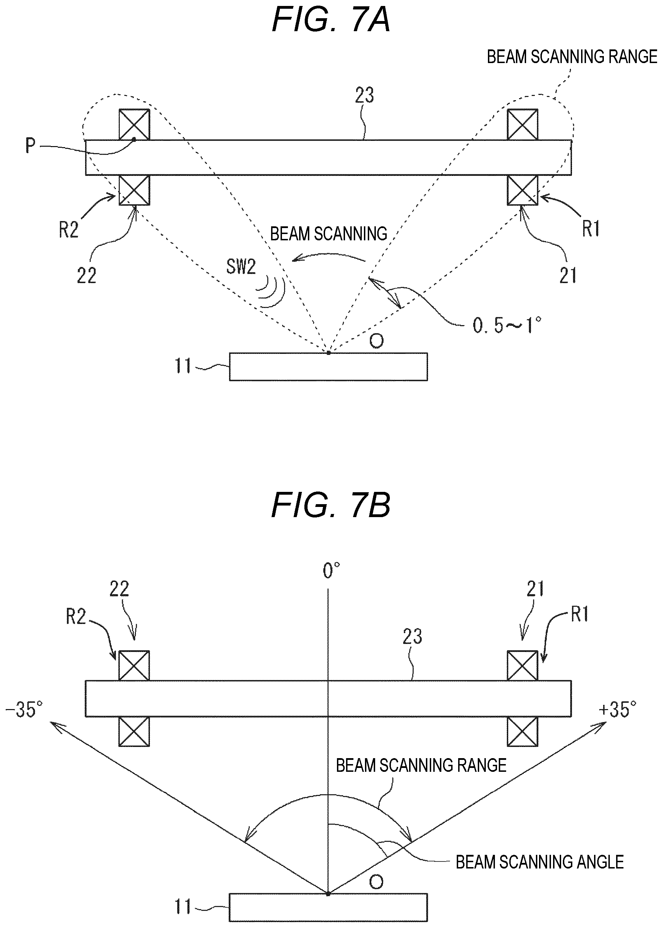

As illustrated in FIG. 7A, the secondary sound pressure signal SP2 is generated by performing the beamforming processing on the primary sound pressure signal SP1. In the beamforming processing of the present embodiment, a beam scanning range is set within a detection range, of an angle with respect to an origin O of the sound collecting device 11, of the synthesized sound wave SW2 . Then, the beam scanning range is scanned for each beam scanning range of about 0.5° to 1° to process the primary sound pressure signal SP1. Specifically, a power spectral density (hereinafter referred to as power spectral density (PSD)) at each frequency of the sound wave SW1 reaching the sound collecting device 11 is calculated for each beam scanning range, to generate the secondary sound pressure signal SP2. In the present embodiment, a known method (for example, delay and sum beamforming or filter and sum beamforming) is used as a specific method of the beamforming processing.

In the first microphone group MG1 of the sound collecting device 11, the interval between the microphones 110 is about 2.3 mm to 8.5 mm, which is smaller than half the wavelength of the ultrasonic wave. For this reason, in a case where the signal, in the ultrasonic range, of the primary sound pressure signal SP1, detected in the first microphone group MG1 is used, a phase difference, of the signal detected by each microphone 110, of one wavelength or more can be reliably obtained. In a case where the primary sound pressure signal SP1 is used, good localization accuracy can be obtained in the secondary sound pressure signal SP2 after the beamforming processing. Accordingly, the monitoring device 1 can accurately detect the target region R based on the secondary sound pressure signal SP2.

In the present embodiment, as illustrated in FIG. 7B, the center of the sound collecting device 11 is defined as the origin O, and an angle of a front direction of the sound collecting device 11 from the origin O is defined as 0°. A scanning angle of the beam with respect to the angle of 0° is referred to as a beam scanning angle, and the "beam scanning range" is set to a range from -35° to +35°.

In particular, the detection unit 132 is configured to detect the target region R including the abnormal portion P, by using the secondary sound pressure signal SP2 of the ultrasonic range (that is, 20 kHz or more). The deterioration of a lubrication state of a rotation portion, which causes scratches on the rotation portion (for example, the bearing) of the device 2, is likely to appear as a sound wave of about 30 kHz to 35 kHz. Therefore, the sound wave of the ultrasonic range (that is, 20 kHz or more) is suitable for detection of the target region R including the abnormal portion P of the rotation portion.

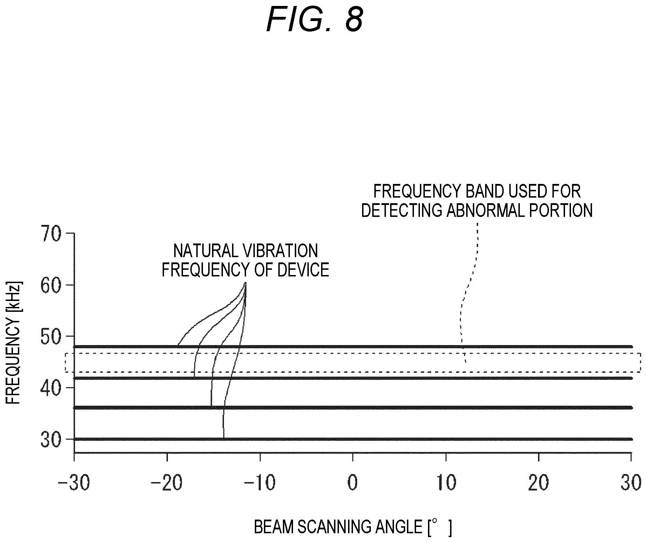

FIG. 8 illustrates the secondary sound pressure signal SP2 generated from the device 2 having no abnormality. The secondary sound pressure signal SP2 can be generated based on the initial primary sound pressure signal SP0. Hereinafter, the secondary sound pressure signal SP2 generated by performing the beamforming processing on the initial primary sound pressure signal SP0 is distinguished and is referred to as an initial secondary sound pressure signal SP3.

FIG. 8 illustrates the initial secondary sound pressure signal SP3 in the ultrasonic range, and power spectra independent of the beam scanning angle (hereinafter, referred to as power spectrum (PS)) appear in the vicinity of 30 kHz, 36 kHz, 42 kHz, and 48 kHz. This is PS of a natural vibration frequency of the device 2. The PS of the natural vibration frequency becomes noise in a case where the target region R including the abnormal portion P is detected. Therefore, in a case where the detection unit 132 detects the target region R, it is preferable to use the secondary sound pressure signal SP2 in a frequency band in which the natural vibration frequency of the device 2 is avoided. Therefore, in the present embodiment, the secondary sound pressure signal SP2 in the frequency band from 43 kHz to 47 kHz, corresponding to the range surrounded by a dotted line illustrated in FIG. 8, is used to detect the target region R including the abnormal portion P. Here, although not illustrated in FIG. 8, the PSD can be illustrated on a graph by changing shade and a color tone according to the density of PS in a graph of PS as indicated by lines or points in FIG. 8.

As described above, the information processing device 12 of the present embodiment is configured to detect the abnormal portion P of the device 2, based on the secondary sound pressure signal SP2 in the frequency band that does not include the natural vibration frequency of the device 2, in the processing of the abnormal portion detection step S4. With this configuration, it is possible to more accurately detect the abnormal portion P of the device 2.

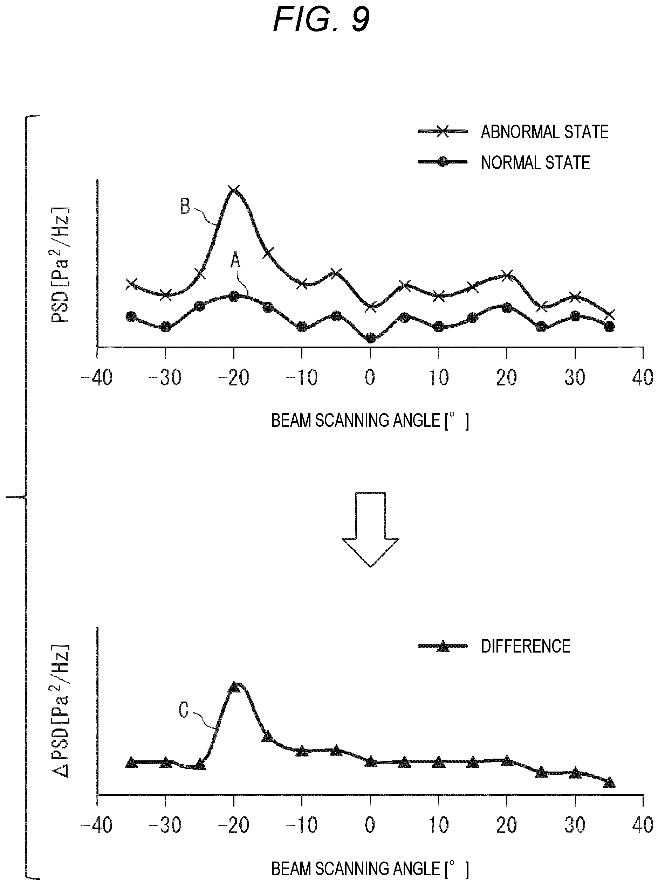

FIG. 9 illustrates a relationship between the beam scanning angle and the PSD of the secondary sound pressure signal SP2 of a frequency (for example, 46 kHz) selected from the frequency band (see FIG. 8) suitable for detection of the target region R including the abnormal portion P. FIG. 9 illustrates a graph A related to the device 2 in which the operation state is normal and a graph B related to the device 2 in which the operation state is abnormal. The graph A is a graph based on the initial secondary sound pressure signal SP3.

The monitoring device 1 is configured to detect the abnormal portion P, based on the difference between the initial secondary sound pressure signal SP3 (that is, the graph A) of the device 2 having no abnormality in the operation state and the secondary sound pressure signal SP2 (that is, the graph B) of the device 2 having an abnormality. In the present embodiment, the difference (that is, the graph C) between the initial secondary sound pressure signal SP3 (that is, the graph A) and the secondary sound pressure signal SP2 (that is, the graph B) is generated, and the abnormal portion P is detected based on the difference.

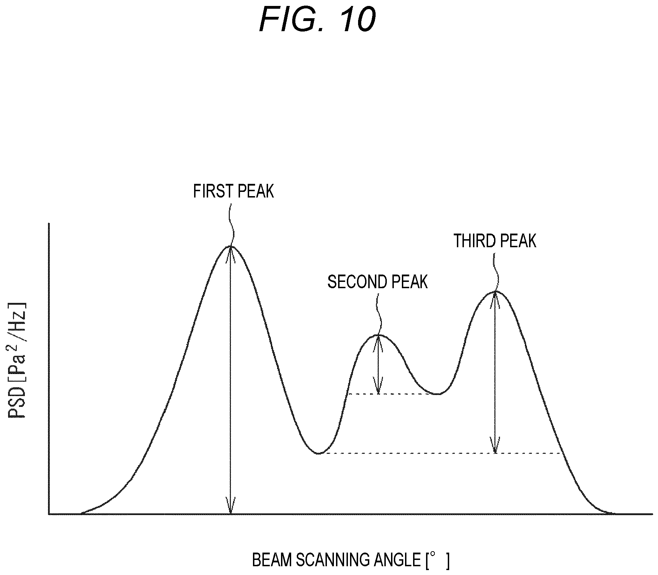

As illustrated in FIG. 9, by subtracting data in the case where there is no abnormality from data in the case where there is an abnormality, sound increased by the occurrence of the abnormality in the device 2 appears in a conspicuous manner in a graph C. Specifically, in the graph C, a peak of the PSD appears in a vicinity of -20° of the beam scanning angle. Accordingly, the detection unit 132 determines that the target region R including the abnormal portion P is present in a direction at an angle of -20° in the XY plane as viewed from the center of the sound collecting device 11 (that is, the origin O). In a case where there are a plurality of peaks (for example, a first peak to a third peak) as illustrated in FIG. 10 in the difference (that is, the graph C) between the initial secondary sound pressure signal SP3 (that is, the graph A) and the secondary sound pressure signal SP2 (that is, the graph B), the detection unit 132 is configured to determine that an angle of a portion having the largest peak value of the difference (that is, the first peak) is an angle at which the target region R including the abnormal portion P is present.

The detection unit 132 is configured to collate, with the map information M1, the angle, at which the target region R including the abnormal portion P is present, determined from the secondary sound pressure signal SP2 (that is, the angle of -20° in the present embodiment) to detect the target region R in which the abnormality occurs. Accordingly, the abnormal portion detection step S4 ends.

As described above, in the monitoring device 1, the detection unit 132 is configured to detect an angle of each sound wave SW1, as the propagation direction, from the synthesized sound wave SW2 detected by the sound collecting device 11, and configured to collate the angle with the map information M1, to detect the target region R including the abnormal portion P.

As described above, the information processing device 12 of the present embodiment is configured to perform the processing of acquiring the initial primary sound pressure signal SP0 of the sound wave emitted from the device 2 at an initial stage of the operation in the sound collecting step S1, and in the processing of performing the abnormal portion detection step S4, the information processing device 12 is configured to detect the abnormal portion P of the device 2 based on the difference between the initial secondary sound pressure signal SP3 generated by performing the beamforming processing on the initial primary sound pressure signal SP0 and the secondary sound pressure signal SP2 after the initial stage of the operation of the device 2. With this configuration, it is possible to more accurately detect the abnormal portion P of the device 2.

### <Abnormal Content Detection Step>

Next, an abnormal content detection step S5 is performed. In a case where it is determined that there is an abnormality in any of the target regions R, the detection unit 132 is configured to perform a processing of detecting a content of the abnormality. In the abnormal content detection step S5, the detection unit 132 is configured to detect the content of the abnormality occurring in the target region R, using, in particular, a signal in a frequency range of an audible sound (that is, 20 Hz or more and less than 20 kHz) in the primary sound pressure signal SP1 stored in the sound pressure signal storage unit 142.

In a case where the abnormal content detection step S5 is started, the detection unit 132 is configured to acquire a feature amount included in the signal, in the audible range, of the primary sound pressure signal SP1. For example, a feature amount in the target region R is compared with a plurality of pieces of abnormality information stored in a predetermined database.

In the abnormal content detection step S5, as a typical abnormality of the device 2, the characteristic sound wave SW3 in the audible range of about several hundred Hz used in the abnormality detection step S2 can be used as the feature amount. In a case where there is abnormality information matching the feature amount (that is, the characteristic sound wave SW3) among the plurality of pieces of abnormality information, it is determined that the abnormality of the target region R is an abnormality based on the abnormality information. In a case where there is no abnormality information matching the feature amount (that is, the characteristic sound wave SW3) among the plurality of pieces of abnormality information, it is determined that the abnormality is an unknown abnormality. Accordingly, the abnormal content detection step S5 ends.

As described above, in a case where the information processing device 12 of the present embodiment is configured to detect that there is an abnormality in the device 2 in the abnormality detection step S2, the information processing device 12 can further perform the processing of the abnormal content detection step S5 of detecting the abnormal content of the device 2 based on the signal, in the audible range, of the primary sound pressure signal SP1. In this way, by setting the sound wave for which the abnormal content is detected as the audible sound (that is, the characteristic sound wave SW3 in the present embodiment), it is possible to accurately detect the abnormal content of the device 2 based on the typical audible sound emitted from the device 2 having the abnormality.

As illustrated in FIG. 5, in the present embodiment, the case where the abnormal content detection step S5 is performed after the abnormal portion detection step S4 is exemplified, but the abnormal content detection step S5 can be performed after the determination result of "abnormality" in the device 2 is output in the abnormality detection step S2. That is, the abnormal content detection step S5 may be performed before the abnormal portion detection step S4 or may be performed in parallel with the abnormal portion detection step S4.

### <Notification Step>

In a case where the detection unit 132 outputs the result of "no abnormality" in the abnormality detection step S2, or in a case where the abnormal content detection step S5 ends, next, the notification step S6 is performed. In a case where the notification step S6 is started, the information processing device 12 is configured to output the monitoring information to the display device 15 based on the abnormality determination result, the detection result of the abnormal target region R, and a detection result of the abnormal content stored in the sound pressure signal storage unit 142. In this case, it is preferable to output the monitoring information for each of the plurality of target regions R. In addition, the information processing device 12 may be configured to output the monitoring information to the management device via the communication device 17. In a case where it is determined that there is an abnormality in the target region R, a warning sound may be issued from the speaker of the display device 15. Accordingly, the notification step S6 ends.

### [Detection Result of Target Region by Monitoring Device]

An experiment of detecting the target region R including the abnormal portion P was performed using the monitoring device 1 illustrated in FIG. 1. In the map information M1, the maximum angle θ1 = +31° and the minimum angle θ2 = +16° are stored regarding the bearing 21 positioned in the target region R1. In addition, in the map information M1, the maximum angle θ3 = -31° and the minimum angle θ4 = -16° are stored regarding the bearing 22 positioned in the target region R2 (see FIG. 3A and FIG. 3B).

### Here, experiments were performed using five types of patterns described below.

A first pattern PT1 is a case where the bearing 22 having the abnormal portion P in a rolling element is used.

A second pattern PT2 is a case where the bearing 22 having the abnormal portion P in an inner ring is used.

A third pattern PT3 is a case where the bearing 21 having the abnormal portion P in a rolling element is used.

A fourth pattern PT4 is a case where the bearing 21 having the abnormal portion P in an inner ring is used.

A fifth pattern PT5 is a case where the bearing 21 having the abnormal portion P in the inner ring and the bearing 22 having the abnormal portion P in the rolling element are used.

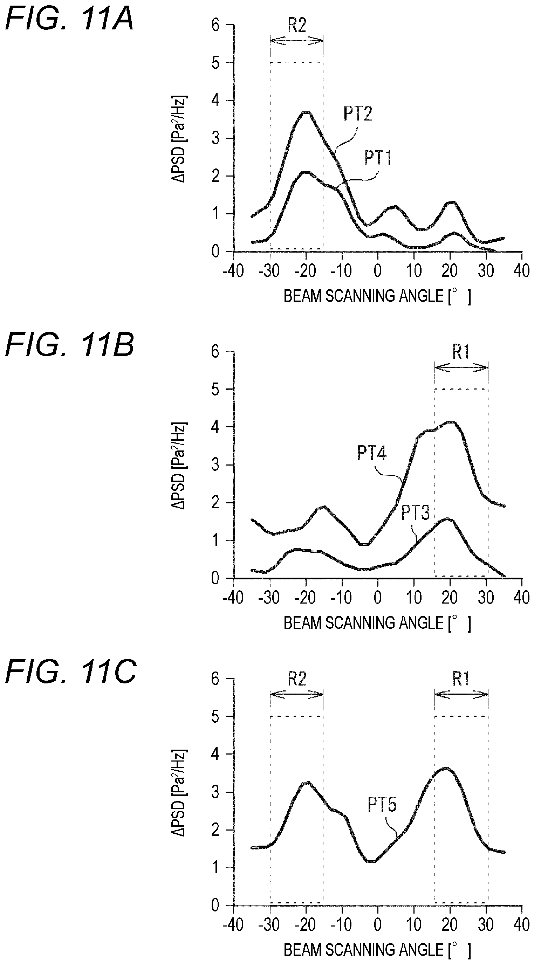

FIG. 11A illustrates detection results of the difference of the PSD in the case of the first pattern PT1 and the second pattern PT2. In the graph illustrating the experimental results of the first pattern PT1 and the second pattern PT2, the peak of the PSD appears in the vicinity of the angle of -22°. The angle of -22° is included in a range of -16° to -31° that is an existence range of the target region R2 (that is, the bearing 22) stored in the map information M1. Then, based on the detection result, the detection unit 132 determines that there is the abnormal portion P in the target region R2 in which the bearing 22 is present.

FIG. 11B illustrates detection results of the difference of the PSD in the case of the third pattern PT3 and the fourth pattern PT4. In the graph illustrating the experimental results of the third pattern PT3 and the fourth pattern PT4, the peak of the PSD appears in the vicinity of the angle of +22°. The angle of +22° is included in a range of +16° to +31° that is an existence range of the target region R1 (that is, the bearing 21) stored in the map information M1. Then, based on the detection result, the detection unit 132 determines that there is the abnormal portion P in the target region R1 in which the bearing 21 is present.

From these experimental results, it was confirmed that, according to the monitoring device 1, in a case where an abnormality occurs in any of the target regions R, it is possible to accurately detect the target region R including the abnormal portion P.

FIG. 11C illustrates a detection result of the difference of the PSD in the case of the fifth pattern PT5. In the graph illustrating the experimental result of the fifth pattern PT5, the peak of the PSD appears in the vicinity of the angle of -22° and in the vicinity of the angle of +22°. The angle of +22° is included in the range of +16° to +31° that is the existence range of the bearing 21 stored in the map information M1, and the angle of -22° is included in the range of -16° to -31° that is the existence range of the bearing 22. Then, the detection unit 132 of the monitoring device 1 determined that there is the abnormal portion P in each of the target region R1 in which the bearing 21 is present and the target region R2 in which the bearing 22 is present, based on the experimental result.

From the experimental results, it was confirmed that, according to the monitoring device 1, in a case where the abnormal portions P are simultaneously generated in the plurality of target regions R, the plurality of target regions R including the abnormal portion P can be respectively detected.

As described above, the monitoring device 1 of the present embodiment is the monitoring device 1 configured to monitor the operation state of the device 2, and the monitoring device 1 includes the sound collecting device 11 in which the plurality of microphones 110 configured to convert the sound wave including the audible sound and the ultrasonic wave emitted from the device 2 into the primary sound pressure signal SP1 are arranged, and the information processing device 12 configured to perform processing of performing the abnormality detection step S2 of detecting the presence or absence of the abnormality of the device 2 based on the signal, in the audible range, of the primary sound pressure signal SP1, and a processing of generating the secondary sound pressure signal SP2 by performing the beamforming processing on the signal, in the ultrasonic range, of the primary sound pressure signal SP1 and performing the abnormal portion detection step S4 of detecting the target region R including the abnormal portion P of the device 2 based on the secondary sound pressure signal SP2.

According to the monitoring device 1, it is possible to accurately detect the target region R including the abnormal portion P without increasing the interval between the microphones 110 by setting, to the ultrasonic wave, the sound wave for detecting the target region R including the abnormal portion P of the device 2. Further, by setting, to the audible sound, the sound wave for detecting the abnormality of the device 2, it is possible to accurately detect the abnormality of the device 2 based on the typical audible sound emitted from the device 2 having the abnormality. As a result, it is possible to accurately detect the abnormality of the device without increasing the size of the sound collecting device 11.

The embodiments disclosed above are illustrative and non-restrictive in every respect. That is, the monitoring device of the present disclosure is not limited to the illustrated embodiment, and may be another form within the scope of the present disclosure.

The present application is based on Japanese Patent Application No. 2020-192520 filed on November 19, 2020, and the content thereof is incorporated herein as reference.

## Claims

1. A monitoring device for monitoring an operation state of a device, the monitoring device comprising:
a sound collecting device in which a plurality of microphones are arranged, the plurality of microphones being configured to convert a sound wave emitted from the device into a primary sound pressure signal, the sound wave including an audible sound and an ultrasonic wave; and
an information processing device configured to perform:
a first processing of detecting presence or absence of an abnormality of the device, based on a signal, in an audible range, of the primary sound pressure signal; and
a second processing of performing a beamforming processing on a signal, in an ultrasonic range, of the primary sound pressure signal to generate a secondary sound pressure signal, and detecting an abnormal portion of the device, based on the secondary sound pressure signal.

2. The monitoring device according to claim 1,
wherein the information processing device is configured to perform the second processing, in a case where the information processing device detects, in the first processing, that there is an abnormality in the device.

3. The monitoring device according to claim 1 or 2,
wherein the information processing device is configured to further perform a third processing of detecting an abnormal content of the device, based on a signal, in the audible range, of the primary sound pressure signal, in a case where the information processing device detects, in the first processing, that there is an abnormality in the device.

4. The monitoring device according to any one of claims 1 to 3,
wherein, in the second processing, the information processing device is configured to detect the abnormal portion of the device, based on the secondary sound pressure signal in a frequency band that does not include a natural vibration frequency of the device.

5. The monitoring device according to any one of claims 1 to 4,
wherein the information processing device is configured to perform a fourth processing of acquiring an initial primary sound pressure signal, the initial primary sound pressure signal being the primary sound pressure signal of the sound wave emitted from the device at an initial stage of an operation of the device, and
in the second processing, the information processing device is configured to detect the abnormal portion of the device, based on a difference between an initial secondary sound pressure signal and the secondary sound pressure signal, the initial secondary sound pressure signal being the secondary sound pressure signal generated by performing the beamforming processing on the initial primary sound pressure signal, the secondary sound pressure signal being generated in the second processing after the initial stage of the operation of the device.

6. The monitoring device according to any one of claims 1 to 5,
wherein the plurality of microphones include:
a first microphone group in which an interval between the microphones is set to a distance suitable for detection of the ultrasonic wave; and
a second microphone group in which an interval between the microphones is set to a distance suitable for detection of the audible sound and larger than the distance of the first microphone group.

7. A sound collecting device used in a monitoring device for monitoring an operation state of a device, the sound collecting device comprising:
a plurality of microphones configured to convert a sound wave emitted from the device into a sound pressure signal, the sound wave including an audible sound and an ultrasonic wave,
wherein the plurality of microphones include:
a first microphone group in which an interval between the microphones is set to a distance suitable for detection of the ultrasonic wave; and
a second microphone group in which an interval between the microphones is set to a distance suitable for detection of the audible sound and larger than the distance in the first microphone group.

8. A monitoring method for monitoring an operation state of a device by a sound collecting device in which a plurality of microphones are arranged, the monitoring method comprising:
acquiring, as a primary sound pressure signal, a sound wave emitted from the device through the plurality of microphones, the sound wave including an audible sound and an ultrasonic wave;
detecting presence or absence of an abnormality of the device, based on a signal, in an audible range, of the acquired primary sound pressure signal; and
in a case where it is detected that there is an abnormality in the device, detecting an abnormal portion of the device, based on a secondary sound pressure signal generated by performing a beamforming processing on a signal, in an ultrasonic range, of the acquired primary sound pressure signal.

9. The monitoring method according to claim 8, further comprising:
in a case where it is detected that there is an abnormality in the device, detecting an abnormal content of the device, based on a signal, in the audible range, of the acquired primary sound pressure signal.
